Europäisches Patentamt

European Patent Office

Office européen des brevets

(11) Veröffentlichungsnummer: **0 272 437 B1**

(12) **EUROPÄISCHE PATENTSCHRIFT**

(45) Veröffentlichungstag der Patentschrift: **12.08.92**

(21) Anmeldenummer: **87116696.3**

(22) Anmeldetag: **12.11.87**

(51) Int. Cl.⁵: **A23G 3/04**, A23G 3/02

(54) **Verfahren und Vorrichtung zur Wärmebehandlung von Süsswarenmassen mittels Wärmetauscher.**

(30) Priorität: **03.12.86 DE 3641223**

(43) Veröffentlichungstag der Anmeldung:
**29.06.88 Patentblatt 88/26**

(45) Bekanntmachung des Hinweises auf die
Patenterteilung:
**12.08.92 Patentblatt 92/33**

(84) Benannte Vertragsstaaten:
**AT BE CH ES FR GB GR IT LI LU NL SE**

(56) Entgegenhaltungen:
DE-A- 3 435 363      DE-B- 1 046 992
FR-A- 1 581 088      FR-A- 2 171 024
FR-A- 2 297 574      FR-A- 2 578 856
GB-A- 990 425        GB-A- 1 569 729
GB-A- 2 056 297      US-A- 2 197 919
US-A- 2 915 023      US-A- 3 038 809
US-A- 3 119 339      US-A- 3 749 378
US-A- 4 124 438

(73) Patentinhaber: **Klöckner Hänsel GmbH**
**Lister Damm 19**
**W-3000 Hannover(DE)**

(72) Erfinder: **Mergelsberg, Reinhard**
**Andrea Strasse 11**
**W-3008 Garbsen(DE)**
Erfinder: **de Vilchez, José**
**Fritz-Beindorff-Allee 9**
**W-3000 Hannover 1(DE)**
Erfinder: **Markwardt, Klaus**
**Höfestrasse 3 B**
**W-3014 Laatzen 1(DE)**
Erfinder: **Schlüter, Jürgen**
**Kleiner Ranzen 10**
**W-3255 Langenau Ot Feggendorf(DE)**

(74) Vertreter: **Rehberg, Elmar, Dipl.-Ing.**
**Postfach 3162 Am Kirschberge 22**
**W-3400 Göttingen(DE)**

EP 0 272 437 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Wärmebehandlung einer pumpbaren Süßwarenmasse, die durch die Heizschlange eines Wärmetauschers, welche durch einen dampfbeheizten Raum geführt ist, gefördert und die aus dem Wärmetauscher austretende Süßwarenmasse in einen Auffangbehälter geleitet wird, in welchem Gas aus der Masse entweichen kann. Die Vorrichtung arbeitet mit einem Wärmetauscher und einem dem Wärmetauscher nachgeschalteten Auffangbehälter für die Süßwarenmasse.

Ein derartiges Verfahren und eine entsprechende Vorrichtung sind aus der DE-AS 10 33 018 bekannt. Dabei wird die pumpbare Süßwarenmasse, z. B. eine Zuckerlösung oder ein Zuckerglucose-Slurry, durch die Heizschlange des Wärmetauschers gefördert, die durch den dampfbeheizten Raum des Wärmetauschers geführt ist. Es findet somit ein Wärmeaustausch statt, so daß die Süßwarenmasse aufgeheizt wird. Die pro Zeiteinheit übertragene Wärmemenge hängt von den Eigenschaften der verwendeten Werkstoffe, von den Abmessungen der zur Wärmeübertragung herangezogenen Flächen sowie von der Temperaturdifferenz zwischen dem Dampf und der Süßwarenmasse ab. Auch die Strömungsverhältnisse innerhalb der Heizschlange des Wärmetauschers wirken sich aus. Die Heizschlange endet in einem dem Wärmetauscher nachgeschalteten Auffangbehälter, in welchem Gas aus der Süßwarenmasse entweichen kann.

Um den Wärmeübergang zu verbessern, ist es möglich, die Temperaturdifferenz möglichst groß einzustellen, was jedoch zur Folge hat, daß die zu behandelnde Süßwarenmasse sehr leicht verbrennen kann, so daß hier enge Grenzen gesetzt sind.

Aus der FR-A-7 205 098 ist ein Verfahren und eine Vorrichtung zur Erhitzung von Süßwarenmasse bekannt, bei dem sich die Süßwarenmasse in einem Behälter befindet, der ansonsten von einem Bündel vertikaler und von Heizdampf durchflossener Rohre durchsetzt ist. Im Boden des Behälters sind verschiedene Lufteinlaßöffnungen über den Umfang verteilt angeordnet, durch die wechselweise Luft ausgestoßen wird, um die Süßwarenmasse im Behälter zu durchmischen. Auf diese Art und Weise wird der Wärmeübergang an den Heizrohren verbessert. Die Luft stellt damit praktisch einen Rührantrieb für die Süßwarenmasse dar. Der Behälterinnenraum wird unter Unterdruck gehalten.

Aus der DE-A-3 435 363 ist ein Verfahren und eine Vorrichtung zur Herstellung von Rohmassen, beispielsweise Marzipan- oder Persipanrohmassen, bekannt. Die Rohmasse tritt am Eingang eines Behälters aus einem Rohr in den Innenraum des Behälters über, wobei der Rohmasse noch innerhalb des Rohres Luft hinzugefügt wird. Im Innern des Behälters, der zu Heizzwecken eine doppelte Wandung besitzt, sind an einer Rotorwelle befestigte Schabemesser angeordnet, die die innere Wand des Behälters abschaben und somit die Wärmeübergangsfläche säubern und die Wärmeübertragung optimieren. Über einen Steigschichtverdampfer gelangt die Rohmasse dann in einen Auffangbehälter, in welchem Brüden und Rohmasse getrennt werden.

Andererseits ist es bekannt, in den Heizschlangen verschiedene Einbauten anzuordnen, welche zu einer erhöhten Wirbel- bzw. Turbulenzbildung der Süßwarenmasse innerhalb der Heizschlangen führen, wodurch die Wärmeübertragung ebenfalls verbessert wird. Nachteilig ist hierbei, daß an den Einbauten häufig Toträume entstehen, in denen die Süßwarenmasse unkontrolliert lange verweilt und dadurch verbrennen kann. Die Reinigung derartig ausgebildeter Heizschlangen ist nur sehr schwierig möglich und erfordert einen erheblichen Aufwand, wobei der Erfolg nicht zu garantieren ist. Abgesehen hiervon läßt sich die Wirbelbildung während des Betriebs nicht verändern, so daß eine Steuerung des Vorgangs unmöglich ist.

Aufgabe der Erfindung ist es, hier für Abhilfe zu sorgen und ein Verfahren sowie eine Vorrichtung zu dessen Durchführung zu schaffen, durch welche einerseits der Wirkungsgrad bei der Wärmeübertragung erhöht und andererseits der gesamte Vorgang präzise steuerbar wird, ohne daß dabei die Gefahr besteht, daß die zu behandelnde Süßwarenmasse zumindest teilweise anbrennt oder verdirbt.

Erfindungsgemäß wird dies bei dem eingangs genannten Verfahren dadurch erreicht, daß der zu behandelnden Süßwarenmasse bei Elntritt in den Wärmetauscher ein Gas zugegeben, das Gas homogen mit der Süßwarenmasse vermischt und das Gemisch durch die Heizschlange des Wärmetauschers geführt wird. Durch das Einführen des Gases vergrößert sich das Volumen der Masse, so daß sich aufgrund der veränderten Mengenverhältnisse ein besserer Wärmeübergang ergibt. Wichtiger ist noch, daß durch das eingeleitete Gas in der Masse Turbulenzen entstehen, welche dafür sorgen, daß die Masse innerhalb des Wärmetauschers dauernd gemischt wird, so daß die an der Wand des Wärmetauschers von der Masse aufgenommene Wärme sofort abgeführt wird. Der Wirkungsgrad des Wärmetauschers wird hierdurch erheblich gesteigert. Einbauten sind nicht mehr erforderlich. Es lassen sich vorteilhaft auch besonders empfindliche Massen verarbeiten, da die Temperaturdifferenz erheblich geringer gehalten werden kann. Es können aber auch die Abmessungen des Wärmetauschers verringert werden, so daß die gesamte Anlage damit kostengünstig herstellbar ist.

Das eingeführte Gas kann vorgewärmt werden, um einen Kühleffekt zu vermeiden und insoweit die Verhältnisse zu verbessern.

Als Gas kann zweckmäßig Druckluft Verwendung finden.

Die Vorrichtung zur Durchführung des Verfahrens kennzeichnet sich erfindungsgemäß dadurch, daß am Einlaß der Heizschlange für die Süßwarenmasse eine Einführeinrichtung für ein Gas vorgesehen ist. Mit dieser Einführeinrichtung wird das Gas zweckmäßig injektorartig in die Süßwarenmasse eingebracht und dabei mit dieser homogen vermischt. Das Gas wird dabei über eine Leitung zugeführt, in welcher ein regelbares Ventil vorgesehen ist. Die gesamte Vorrichtung ist außerordentlich einfach im Aufbau und erfordert keine zusätzlichen Teile, die beispielsweise im Innern der Heizschlange des Wärmetauschers anzuordnen wären. Somit ist auch die Reinigung der Heizschlange sehr einfach und Toträume, in denen die Süßwarenmasse innerhalb des Wärmetauschers längere Zeit verweilen könnte, sind nicht mehr vorhanden.

Die Einführeinrichtung, der Wärmetauscher und der Auffangbehälter können als geschlossenes, unter Überdruck stehendes System ausgebildet sein.

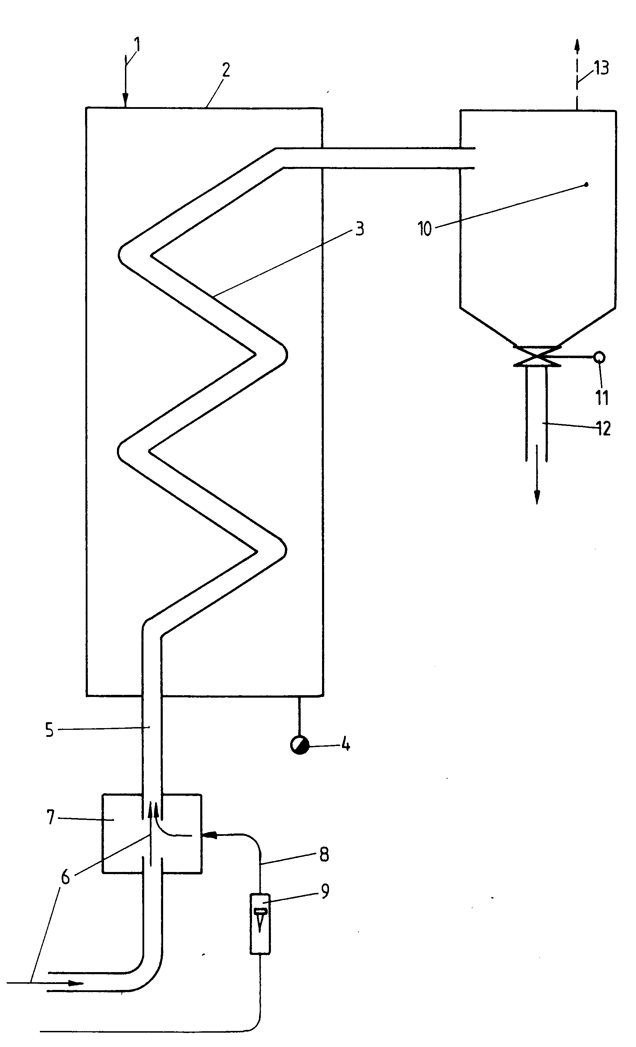

Die Vorrichtung zur Durchführung des Verfahrens wird in einem bevorzugten Ausführungsbeispiel anhand der Zeichnung weiter erläutert, die eine schematische Darstellung der für das Verständnis der Erfindung wesentlichen Vorrichtungsteile zeigt.

Die Wärmeübertragung erfolgt im Wärmetauscher 1, welcher im wesentlichen von herkömmlicher Bauart sein kann und aus einem Gehäuse 2 aufgebaut ist, in dessen Innern die Heizschlange 3 angeordnet ist. Der Innenraum des Gehäuses 2 wird dabei von Heißdampf durchströmt. Zum Ablassen etwa entstehenden Kondensats ist ein Ablaß 4 vorgesehen.

Durch die Heizschlange 3 strömt die Süßwarenmasse 5, und zwar in Richtung der Pfeile 6. Auf der Einlaßseite der Heizschlange 3 ist eine Einführeinrichtung 7 vorgesehen, mit welcher ein Gas, beispielsweise Luft, in die Süßwarenmasse 5 eingebracht werden kann. Das Gas gelangt dabei über eine Leitung 8 in die Einführeinrichtung 7. In der Leitung 8 ist dabei ein Ventil 9 vorgesehen, mit welchem sich die Gaszufuhr steuern läßt.

Auf der Auslaßseite des Wärmetauschers 1 führt die Heizschlange 3 in einen Auffangbehälter 10. An diesen ist über ein Absperrventil 11 die Abflußleistung 12 für die Süßwarenmasse 5 angeschlossen. Der Auffangbehälter 10 ist allseits angeschlossen und ist im oberen Bereich mit einer Abzugseinrichtung oder Abzugsöffnung 13 für das eingangs eingeführte Gas bzw. für Brüden ausgestattet.

Mit der Einführeinrichtung 7 wird ein Gas, vorzugsweise Druckluft, in die Süßwarenmasse eingeleitet. Es entsteht dadurch ein Gemisch aus Süßwarenmasse und Luft. Dabei verändert sich das Volumen der durch die Heizschlange 3 geförderten Masse, was sich auf die Wärmeübertragung günstig auswirkt. Wichtiger jedoch ist, daß in der Masse durch die eingeführte Luft ständig Turbulenzen entstehen, was zu einer ständigen Durchmischung der Süßwarenmasse innerhalb der Heizschlange 3 führt. Die an den Wänden der Heizschlange 3 aufgenommene Wärme wird daher augenblicklich abgeführt, wodurch der Wirkungsgrad wesentlich erhöht wird. Die Temperaturdifferenz zwischen dem Dampf und der Süßwarenmasse kann daher relativ gering gehalten werden. Es lassen sich daher auch besonders empfindliche Süßwarenmassen verarbeiten, die in herkömmlicher Weise nicht hergestellt werden können. Der Wärmetauscher 1 kann u. U. eine geringere Größe aufweisen, da der Wirkungsgrad der Einrichtung durch die eingeblasene Luft wesentlich erhöht wird.

Zweckmäßigerweise kann die Luft vor dem Einblasen in die Süßwarenmasse 5 vorgewärmt werden, was die Heizwirkung weiter unterstützt.

Aus dem Wärmetauscher 1 gelangt die aufgeheizte Süßwarenmasse in den Auffangbehälter 10, wo sie sich absetzen und in die eingangs eingeführte Luft entweichen kann. Der Auffangbehälter 10 ist hierzu im oberen Bereich mit einer Abzugseinrichtung 13 versehen, durch welche die Luft abgezogen wird.

Der gesamte Vorgang läßt sich präzise steuern, da die Luft über das Ventil 9 genau dosiert zugegeben werden kann. Es ist dabei eine Regelung in weiten Grenzen möglich, wobei hier sehr leicht eine stufenlose automatische Steuerung durchführbar ist. Die Süßwarenmasse wird dabei kontinuierlich durch den Wärmetauscher hindurchgeführt. Komplizierte bewegliche Teile innerhalb des Wärmetauschers sind nicht erforderlich. Abgesehen hiervon kann auch auf Einbauten innerhalb der Heizschlange verzichtet werden, so daß sich diese sehr leicht reinigen läßt.

**Patentansprüche**

1. Verfahren zur Wärmebehandlung einer pumpbaren Süßwarenmasse, die durch die Heizschlange eines Wärmetauschers, welche durch einen dampfbeheizten Raum geführt ist, gefördert und die aus dem Wärmetauscher austretende Süßwarenmasse in einen Auffangbehälter geleitet wird, in welchem Gas aus der Masse entweichen kann, dadurch gekennzeichnet, daß der zu behandelnden Süßwarenmasse bei Eintritt in den Wärmetauscher ein Gas zugegeben, das Gas homogen mit der Süßwarenmasse vermischt und das Gemisch durch die Heizschlange des Wärmetauschers geführt wird.

2. Verfahren nach Anspruch 1, dadurch gekennzeichnet, daß das eingeführte Gas vorgewärmt wird.

3. Verfahren nach Anspruch 1 und 2, dadurch gekennzeichnet, daß als Gas Druckluft Verwendung findet.

4. Vorrichtung zur Durchführung des Verfahrens nach Anspruch 1 oder 2 mit einem eine Heizschlange aufweisenden Wärmetauscher und einem dem Wärmetauscher nachgeschalteten Auffangbehälter für die durch die Heizschlange geführte Süßwarenmasse, dadurch gekennzeichnet, daß am Einlaß der Heizschlange für die Süßwarenmasse eine Einführeinrichtung (7) für ein Gas vorgesehen ist.

5. Vorrichtung nach Anspruch 4 zur Durchführung des Verfahrens nach Anspruch 3, dadurch gekennzeichnet, daß die Einführeinrichtung (7), der Wärmetauscher (1) und der Auffangbehälter (10) als geschlossenes, unter Überdruck stehendes System ausgebildet ist.

**Claims**

1. Process for the heat treatment of a pumpable confectionery mass, which is conveyed through the heating coil of a heat exchanger, which is led through a steam-heated chamber, and the confectionery mass issuing from the heat exchanger is conducted into a collecting container, in which gas can escape from the mass, characterised thereby, that on entry into the heat exchanger a gas is fed to the confectionery mass to be treated, the gas is homogeneously mixed with the confectionery mass and the mixture is led through the heating coil of the heat exchanger.

2. Process according to claim 1, characterised thereby, that the introduced gas is preheated.

3. Process according to claim 1 and 2, characterised thereby, that compressed air finds use as the gas.

4. Device for the carrying out of the process according to claim 1 or 2, with a heat exchanger having a heating coil and a collecting container, which is connected behind the heat exchanger, for the confectionery mass led through the heating coil, characterised thereby, that an introducing equipment (7) for a gas is provided at the inlet of the heating coil for the confectionery mass.

5. Device according to claim 4 for the carrying out of the process according to claim 3, characterised thereby, that the introducing equipment (7), the heat exchanger (1) and the collecting container (7) are constructed as a closed system standing under excess pressure.

**Revendications**

1. Procédé de chauffage d'une masse de confiserie pouvant être pompée, qui est refoulée dans le serpentin chauffant d'un échangeur de chaleur, lequel serpentin traverse un espace chauffé à la vapeur, la masse de confiserie sortant de l'échangeur de chaleur étant conduite dans un récipient de réception dans lequel du gaz peut s'échapper de la masse, **caractérisé** en ce qu'un gaz est ajouté à la masse de confiserie à traiter, à son entrée dans l'échangeur de chaleur, en ce que le gaz est mélangé de manière homogène avec la masse de confiserie, et en ce que le mélange est mis en circulation dans le serpentin chauffant de l'échangeur de chaleur.

2. Procédé selon la revendication 1, caractérisé en ce que le gaz introduit est préchauffé.

3. Procédé selon les revendications 1 et 2, caractérisé en ce que de l'air comprimé est utilisé en tant que gaz.

4. Appareil pour la mise en oeuvre du procédé selon les revendications 1 ou 2, avec un échangeur de chaleur présentant un serpentin chauffant et un récipient de réception disposé à la suite de l'échangeur de chaleur pour recevoir la masse de confiserie mise en circulation dans le serpentin chauffant, **caractérisé** en ce qu'il est prévu un dispositif d'introduction (7) pour un gaz, à l'entrée du serpentin chauffant pour la masse de confiserie.

5. Appareil selon la revendication 4, pour la mise en oeuvre du procédé selon la revendication 3, caractérisé en ce que le dispositif d'introduction (7), l'échangeur de chaleur (1) et le récipient de réception (10) sont sous la forme d'un système clos, mis en surpression.